# EUROPEAN PATENT SPECIFICATION

(11) **EP 3 510 195 B1**
(45) Date of publication and mention of the grant of the patent: **04.11.2020**
(21) Application number: 17772316.0
(22) Date of filing: 05.09.2017
(51) Int. Cl.: D21C 11/00, D21H 11/10, D21H 11/12, D21C 11/10, D21C 11/12

(54) **METHOD AND SYSTEM FOR TREATING SPENT PULPING LIQUOR**
VERFAHREN UND SYSTEM ZUR BEHANDLUNG VON VERBRAUCHTER AUFSCHLUSSLAUGE
PROCÉDÉ ET SYSTÈME DE TRAITEMENT D'EFFLUENT DE PAPETERIE USAGÉ

(30) Priority: 08.09.2016 SE 1651205
(43) Date of publication of application: 17.07.2019
(73) Proprietor: SunCarbon AB, 223 62 Lund (SE)
(72) Inventor: ARKELL, Anders, SE-247 31 Södra Sandby (SE)
(74) Representative: Ström & Gulliksson AB
(86) International application number: PCT/EP2017/072204
(87) International publication number: WO 2018/046482

(56) References cited:
- WO-A1-96/14465
- WO-A1-2011/075060
- CA-A1- 2 101 005
- US-A- 5 415 734

## Description

### Field of the invention

The present invention relates to a method and system for treating spent pulping liquor comprising lignin from a kraft pulping process to recover spent cooking chemicals.

### Background

The kraft pulping process for conversion of wood into wood pulp is well known. A white liquor that contains active cooking chemicals including NaOH (sodium hydroxide) and Na₂S (sodium sulfide) is used to solubilize lignin and liberate fibers from wood chips to produce pulp and spent pulping liquor. The pulp recovered after cooking the wood is also known as brown stock pulp. The spent pulping liquor is also known as black liquor and contains organic substances, active cooking chemicals including mainly NaHS, Na₂S, and NaOH as well as spent cooking chemicals including Na₂CO₃ (sodium carbonate), Na₂SO₄, NaS₂O₃, and NaSO₃. The black liquor is concentrated in an evaporation plant and is then incinerated in a recovery boiler to produce steam and a smelt of molten salts that consists mainly of Na₂CO₃ and Na₂S. The smelt is dissolved in water (or a process water known as weak white liquor) to produce a solution of Na₂CO₃ and Na₂S known as green liquor. The Na₂CO₃ in the green liquor is then converted to NaOH by mixing the green liquor with calcium oxide to regenerate the white liquor containing NaOH and Na₂S for use as active cooking chemicals in the pulping process.

High content of inorganic solids and lignin in the concentrated black liquor from the evaporator lead to increased viscosity and may lead to precipitation of solids which causes undesired plugging in evaporators and pipes. The evaporation plant capacity is a function of evaporation of water from the black liquor and the composition of black liquor. It may desirable to off-load the evaporation plant for example by reducing the charge of spent liquor solutions or aqueous solutions charged to the evaporators in a kraft pulp mill. Higher load of organic material in the black liquor may cause overloading of the recovery boiler. The recovery boiler thus may become a "bottle-neck", for example, if the mill is planning to increase pulp production capacity. Further, recovery boilers and evaporation plants are expensive to upgrade or to replace.

Attempts have been made to reduce the load on the evaporator or recovery boiler to alleviate the plugging and fouling i.e. "off-load" the overall cooking chemical recovery process. These attempts have focused on reducing the thermal load on the recovery boiler since this is usually the bottle-neck of the pulp mill and is the most expensive unit to upgrade or replace. The quantity of organic substances, especially lignin, in the concentrated black liquor determines the limit at which the recovery boiler operates.

WO 2013/137790 and WO 2016/007550 disclose methods for separating lignin from black liquor by acidification then separation of a lignin solid. In WO 2015/150626, a method for handling spent wash solution produced in the washing of lignin that has been precipitated by acidification and then separated from spent alkaline pulping liquor is disclosed. At least part of the spent wash solution is introduced into the chemical recovery cycle. However, acidifying the black liquor increases costs for the requisite acid and alkali since the sodium-sulphur concentrations have to be balanced and leads to problems with increased purge of sodium sulphate, such as ash from an electrostatic precipitator.

WO 2015/137861 discloses a method for membrane filtering of black liquor to obtain a lignin fraction having a desired molecular weight distribution. WO 2015/121477 discloses a process for treating black liquor involving filtering the black liquor with a membrane filter, lowering the pH to precipitate organic matter, adding ammonia and an alcohol to the organic matter, and subjecting the solution to cracking. The obtained lignin may be made into a liquid fuel.

A process for lignin valorization into bio oils by ultrafiltration of spent cooking liquor into various lignin size fractions, acidifying/precipitating the lignin followed by catalytic depolymerization of lignin fractions is described in A. Toledano et. al. Chemical Engineering Journal, vol. 193-194, 2012, p. 396-403.

While systems for recovery and upgrade of lignin in pulp mills are known in the art, it would be desirable to provide improved systems and methods for reducing the load on evaporators and recovery boilers in pulp mills and allow for valorizing the lignin into useful products whilst continuing to recover substantially all of the cooking chemicals used in the pulping process.

### Summary of the invention

The present invention is defined in the current claims 1 and 8. Consequently, the present invention seeks to mitigate, alleviate, eliminate or circumvent one or more of the above-identified deficiencies in the art and disadvantages singly or in any combination by providing in a first aspect a system for treating spent pulping liquor comprising lignin to provide green liquor, the system comprising:
an evaporator for concentrating a first stream of the spent pulping liquor to provide a concentrated pulping liquor;
a recovery boiler for incinerating the concentrated pulping liquor to provide a smelt;
at least one filter for filtering a second stream of the spent pulping liquor to remove lignin therefrom to provide a permeate; and
a green liquor plant for dissolving the smelt from the recovery boiler in at least a part of the permeate from the at least one filter to provide green liquor.

According to an embodiment, the system comprises at least two filters. A first filter for filtering the second stream of the spent pulping liquor to provide a first retentate and a first permeate and a second filter for filtering the first permeate to provide a second retentate and a second permeate. According to such an embodiment at least part of the second permeate is used to dissolve the smelt in the green liquor plant. The first filter may be a membrane filter with a molecular weight cut-off between 0.5 and 20 kDa. The second filter may be a membrane filter with a molecular weight cut-off lower than the one of the first filter. The molecular weight cut-off of the second filter may be between 0.2 and 0.8 kDa.

In some embodiments the system comprises at least one filter for filtering a second stream of the spent pulping liquor to provide a retentate and a permeate. In these embodiments the system further comprises a de-polymerization reactor for treating the retentate to provide a de-polymerized lignin stream.

According to a second aspect there is provided a method for treating spent pulping liquor comprising lignin to provide green liquor, the method comprising:
(a) dividing the spent pulping liquor into a first stream and a second stream;
(b) evaporating the first stream to provide a concentrated pulping liquor;
(c) incinerating the concentrated pulping liquor to provide a smelt;
(d) filtering the second stream to remove lignin, thereby obtaining a permeate with reduced content of lignin;
(e) dissolving the smelt in at least a portion of the permeate to provide green liquor.

According to an embodiment, the filtering step (d) may comprise at least two filtering steps. In the first filtering step, the second stream of the spent pulping liquor is filtered to remove a first portion of lignin to provide a first retentate and a first permeate. In the second filtering step, the first permeate is filtered to remove a second portion of lignin to provide a second retentate and a second permeate. Subsequently, at least part of the second permeate is used to dissolve the smelt in the green liquor plant in step (e). The molecular weight cut-off is typically higher in the first filtering step than in the second filtering step. The molecular weight cut-off may be between 0.5 and 20 kDa in the first filtering step and between 0.2 and 0.8 kDa in the second filtering step. The first retentate and the second retentate may be combined into a single stream comprising the removed lignin.

According to an embodiment, the second stream is between about 5 to 50% by volume of the spent pulping liquor, preferably about 10 to 50% by volume of the spent pulping liquor. Preferably, the first stream is the major stream and the second stream is the minor stream. The volume ratio may thus be at least 2:1.

Spent pulping liquor is very alkaline and there is no need to precipitate lignin in the present process to be able to separate it. Actually, it is preferred to maintain the lignin dissolved to facilitate further processing thereof. Processing of lignin in precipitated form is challenging, as it is very sticky. The pH of permeate resulting from the filtration of the second stream is thus typically highly alkaline. According to an embodiment, the pH of the permeate used to dissolve the smelt is at least 11, such as at least 12. The pH of the permeate may be about 13.

In some embodiments step (d) of the method comprises filtering the second stream to obtain a retentate and a permeate. In these embodiments the method further comprises a step of de-polymerizing the retentate to provide a de-polymerized lignin stream. In embodiments wherein the method comprises more than one filtering step, some but not all of the resulting retentates may be subject to de-polymerization before being combined. By de-polymerization of lignin with higher molecular weight, the molecular weight distribution in the combined retentate will be more narrow. In a method comprising two filtering steps, the first but not the second retentate may be subject to de-polymerization.

In some embodiments, part of the permeate is sent to the evaporator. By sending part of the permeate to the evaporator the concentration of high-molecular compounds in the stream of spent pulping liquor to be evaporated will be lowered, though the content of low molecular weight compounds, e.g. inorganic salts, remains the same. Lowering the concentration of high-molecular compounds in the stream of spent pulping liquor to be evaporated will lower the viscosity of the spent pulping liquor to be evaporated. Thereby the spent pulping liquor to be evaporated may be concentrated to a higher dry content before being incinerated.

### Brief description of the drawings

These and other aspects, features and advantages of which the invention is capable of will be apparent and elucidated from the following description of an embodiment of the present invention, reference being made to the accompanying drawings, in which:

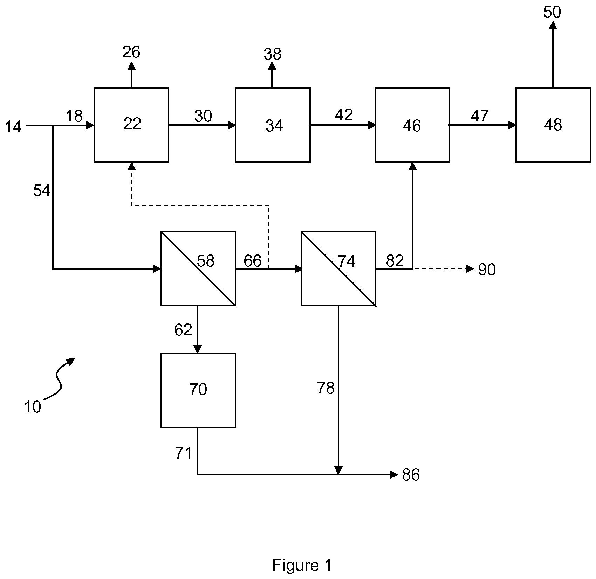

Figure 1 is a system for treating spent pulping liquor comprising lignin according to an embodiment.

### Detailed description of an embodiment

The following description focuses on an embodiment of the present invention applicable to a system and method for treating spent pulping liquor to provide green liquor. However, it will be appreciated that the invention is not limited to this application but may be applied to other systems and methods which involve treating spent liquor e.g. soda liquor from a soda cooking process.

The table below lists features of the system 10 in figure 1.

| **Feature** | **Reference numeral** |
|---|---|
| System | 10 |
| Spent pulping liquor | 14 |
| First stream of pulping liquor | 18 |
| Evaporator | 22 |
| Condensate | 26 |
| Concentrated pulping liquor | 30 |
| Recovery boiler | 34 |
| Flue gases | 38 |
| Smelt | 42 |
| Green liquor plant | 46 |
| Green liquor | 47 |
| White liquor plant | 48 |
| White liquor | 50 |
| Second stream of pulping liquor | 54 |
| First filter | 58 |
| First retentate | 62 |
| First permeate | 66 |
| De-polymerization reactor | 70 |
| De-polymerized lignin stream | 71 |
| Second filter | 74 |
| Second retentate | 78 |
| Second permeate | 82 |
| Combined lignin stream | 86 |
| Brown stock wash | 90 |

As used herein the terms "spent pulping liquor" and "black liquor" are used interchangeably.

Figure 1 illustrates a system 10 for treating spent pulping liquor 14 from a kraft pulp mill comprising lignin. A method for treating spent pulping liquor 14 will also be evident to the skilled person from the description of system 10.

Spent pulping liquor 14 is separated into a first stream 18 and a second stream 54. As already mentioned, spent pulping liquor 14, apart from lignin, comprises spent inorganic cooking chemicals, such as Na₂CO₃, Na₂SO₄, NaS₂O₃, and NaSO₃. Typically, the pH of the spent pulping liquor 14 is 12 or higher, such as about 13.

The first stream 18 enters evaporator 22 wherein it is concentrated to form condensate 26 and concentrated pulping liquor 30. The concentrated liquor 30 then enters recovery boiler 34 for incineration. Flue gases 38 evolve from recovery boiler 34 and a smelt 42 is produced. Smelt 42 is then dissolved in an aqueous second permeate 82 obtained from treatment of the second stream 54 as will be described below. As already mentioned, the smelt comprises molten salts that consist mainly of Na₂CO₃ and Na₂S. Additional aqueous liquids or process water available in the kraft mill (not shown) may be used to dissolve the smelt 42 if the quantity of second permeate 82 is insufficient. Dissolution of smelt 42 occurs in green liquor plant 46 to form green liquor 47 which is re-causticized using calcium hydroxide in white liquor plant 48. The regenerated white liquor 50, comprising NaOH and Na₂S, from the white liquor plant 48 is recycled back to the wood cooking plant of the kraft pulping process (not shown).

The second stream 54 of spent pulping liquor enters first filter 58 wherein stream 54 is separated into a first retentate 62 and a first permeate 66. The first retentate 62 is rich in organic substances, including lignin, while the first permeate 66 is depleted of organic substances. The first retentate 62 is sent to de-polymerization reactor 70 wherein it is treated to produce a de-polymerized lignin stream 71. The first permeate 66 enters second filter 74 to yield a second retentate 78 and a second permeate 82 further depleted of organic substances. Optionally, some of the first permeate 66 is sent to evaporator 22 (cf. dashed line in Fig. 1). This may be advantageous, as the proportion of high-molecular compounds in the stream resulting from diluting the spent pulping liquor to be evaporated with the first permeate 66 will be lowered. Lowering the proportion of high-molecular compounds in the stream of spent pulping liquor to be evaporated will lower the viscosity of the spent pulping liquor to be evaporated, though the content of low molecular weight compounds, e.g. inorganic salts, remains the same. Thereby, the spent pulping liquor to be evaporated may be concentrated to a higher dry content before being incinerated, thereby improving the efficiency in the recovery boiler. Alternatively, some of the first permeate 66 may be used in the wood chip impregnation liquor or reintroduced elsewhere in the pulping process (not shown). The second retentate 78 has a high concentration of substances with a molecular weight distribution determined by the porosity cut-off of the first filter 58 (upper limit) and the second filter 74 (lower limit). Second retentate 78 is combined with de-polymerized lignin stream 71 to produce a combined lignin stream 86 suitable for manufacture of lignin bio-oil or other useful products. By de-polymerizing the first retentate 62, the molecular weight distribution of the combined lignin stream 86 becomes more narrow. Moreover, the combined lignin stream 86 is homogenous. A homogenous lignin stream with a lower and narrower molecular weight distribution is useful as a precursor for the production of liquid fuels. The second permeate 82 has a lower concentration of organic substances than the first permeate 66. At least a portion of the aqueous second permeate 82 is sent to the green liquor plant 46 for dissolving the smelt 42 as described above. The pH of the permeate 82 used to dissolve the smelt 42 is at least 11, typically at least 12, such as about 13. Optionally, some of the second permeate 82 is used to replace evaporation condensate in brown stock wash 90. It may further be discharged to other positions in the kraft mill including wood impregnation steps, oxygen delignification steps or to a bleach plant unit.

The first filter 58 and the second filter 74 are membrane filters operating in cross-flow mode. The membrane of the first filter 58 is an ultrafiltration membrane or an open nanofiltration membrane with a molecular weight cut-off in the range of 0.5 to 20 kDa, preferably about 1 kDa. The molecular weight cut-off of the membrane in the second filter 74 is lower than of the first filter 58 and is preferably between 0.1 and 0.8 kDa, such as about 0.2 kDa.

The second stream 54 that is fed to the first filter 58 is typically a weak spent pulping liquor (i.e. black liquor containing about 15% solids) from the wood digesters of the kraft pulping process as described above. Alternatively, the second stream 54 may be an intermediate black liquor (containing about 20-30% solids) from the black liquor evaporator 22 or a combination of a weak black liquor and an intermediate black liquor. An advantage of using an intermediate black liquor as the second stream 54 is that rosin soaps have usually been removed from the liquor. The rosin soaps may negatively affect the filtering process. Further are the rosin soaps a valuable by-product.

The second stream 54 is between about 10 to 50% by volume of the spent pulping liquor 14. Commonly, the first stream 18 is the major stream and the second stream 54 is the minor stream. The second stream 54 may be about 25% by volume and the first stream 18 may be about 75% by volume of the spent pulping liquor 14.

The present applicant has surprisingly found that the method and system of the invention significantly reduces the load on both the evaporation plant and the recovery boiler in a pulp mill whilst simultaneously recovering substantially all of the cooking chemicals for re-use in the pulping process. Avoiding a trade-off between reducing the load of the evaporation plant and the recovery boiler on the one hand, and the recovery of the cooking chemicals on the other is a major advantage. Thus, the present process allows for pulp production capacity of a kraft pulping mill to be increased whilst dispensing with the need to upgrade or replace the recovery boiler and/or evaporation plant. Further, the method and system of the invention allows for valorizing part of the lignin in the wood into useful products, contributing to the overall process economy.

### Example

The system 10 was operated as follows. Weak black liquor 14 from the digestion of softwood was used. The membrane of the first filter 58 had a molecular weight cut-off of 1 kDa while the membrane of the second filter 74 had a molecular weight cut-off of 0.2 kDa. The weak black liquor 14 was divided into a first stream 18 that was sent to the evaporator 22, recovery boiler 34 etc. as described above and a second stream 54 that was filtered through the first filter 58 operated with cross-flow velocities between 3 and 5 m/s, transmembrane pressures of 5 to 35 bar and at a temperature between 70 °C and 120 °C. The first filter 58 separated between 75 and 90 wt.% of the lignin from the second stream 54. The first retentate 62 had a lignin concentration between 190 and 280 g/l (compared with 55 to 70 g/l in the initial weak black liquor 14 and second stream 54). The first retentate 62 was subjected to base catalysis in de-polymerization reactor 70 at a temperature between 250 and 290 °C for between 10 minutes and 4 hours to depolymerize the lignin. The de-polymerization reactor 70 may contain one or more catalysts. The catalysts may be homogenous or heterogeneous. The catalyst may be selected from the group consisting of nickel, copper, molybdenum, and zirconium catalysts on a support, calcium compounds, sodium hydroxide, and potassium carbonate. Hydrogen gas, a hydrogen donor solvent, or a solvent such as phenol, cresol, or methanol may also be added to the de-polymerization reactor 70. The molecular weight distribution of the lignin was reduced from between 1 and 10 kg/mole in first retentate 62 to between 0.2 and 1.4 kg/mole in de-polymerized lignin stream 71. The first permeate 66 was filtered through second filter 74 at similar conditions to the first filter 58. The obtained second permeate 82 contained lignin and hemicellulose in concentrations of only about 2 wt.% of their concentrations in the second stream of black liquor 54. The second permeate 82 has low organic content and a high content of cooking chemicals including Na₂CO₃. Further, the organic compounds in this stream have a low molecular weight (less than 0.2 kDa). Aqueous streams with low content of organic material may be charged to green liquor plants which are not able to tolerate particulate organics in any quantities, though being equipped with efficient green liquor filters, but rather to tolerate salts and water. The second permeate 82 was sent to the green liquor plant 46. The obtained second retentate 78 contained lignin with a molecular weight distribution between that of the membrane filters i.e. between 0.2 and 1 kDa. This distribution was similar to the lignin in the de-polymerized lignin stream 71. The second retentate 78 was combined with the de-polymerized lignin stream 71 to produce a combined lignin stream 86 suitable for manufacture of lignin bio-oil or other useful products.

## Claims

1. A system (10) for treating spent pulping liquor (14) comprising lignin to provide green liquor (47), the system (10) comprising:
an evaporator (22) for concentrating a first stream (18) of the spent pulping liquor (14) to provide a concentrated pulping liquor (30);
a recovery boiler (34) for incinerating the concentrated pulping liquor (30) to provide a smelt (42);
at least one filter (58, 74) for filtering a second stream (54) of the spent pulping liquor (14) to remove lignin therefrom to provide a permeate (66, 82); and
a green liquor plant (46) for dissolving the smelt (42) from the recovery boiler (34) in at least a part of the permeate (66, 82) from the at least one filter (58, 74) to provide green liquor (47).

2. The system of claim 1, wherein the at least one filter (58, 74) comprises:
a first filter (58) for filtering the second stream (54) of the spent pulping liquor (14) to provide a first retentate (62) and a first permeate (66); and
a second filter (74) for filtering the first permeate (66) to provide a second retentate (78) and a second permeate (82);
wherein the second permeate (82) is used to dissolve the smelt (42) in the green liquor plant (46).

3. The system of claim 2, wherein the first filter (58) is a membrane filter with a molecular weight cut-off between 0.5 and 20 kDa and the second filter (74) is a membrane filter with a molecular weight cut-off lower than first filter (58); preferably the molecular weight cut-off of the second filter (74) is between 0.1 and 0.8 kDa.

4. The system of claim 2 or claim 3, wherein the first filter (58) is a membrane filter with a molecular weight cut-off of about 1 kDa.

5. The system of any one of claims 1 to 4, wherein the second stream (54) is between about 10 to 50% by volume of the spent pulping liquor (14).

6. The system of any one of claims 1 to 5, wherein the second stream (54) is about 25% by volume and the first stream (18) is about 75% by volume of the spent pulping liquor (14).

7. The system of any one of claims 1 to 6, further comprising a de-polymerization reactor (70) for treating the first retentate (62) to provide a de-polymerized lignin stream (71).

8. A method for treating spent pulping liquor (14) comprising lignin to provide green liquor (47), the method comprising:
(a) dividing the spent pulping liquor (14) into a first stream (18) and a second stream (54);
(b) evaporating (22) the first stream (18) to provide a concentrated pulping liquor (30);
(c) incinerating (34) the concentrated pulping liquor (30) to provide a smelt (42);
(d) filtering (58, 74) the second stream (54) to remove lignin, thereby obtaining a permeate (66, 82) with reduced content of lignin;
(e) dissolving (46) the smelt (42) in at least part of the permeate (66, 82) to provide green liquor (47).

9. The method of claim 8, wherein step (d) filtering (58, 74) the second stream (54) to obtain a permeate (66, 82) comprises:
(d1) filtering (58) the second stream (54) of the spent pulping liquor (14) to remove a first portion of lignin to provide a first retentate (62) and a first permeate (66); and
(d2) filtering the first permeate (66) to remove a second portion of lignin to provide a second retentate (78) and a second permeate (82);
wherein at least part of the second permeate (82) is used to dissolve the smelt (42) in the green liquor plant (46) in step (e).

10. The method of claim 8 or claim 9, wherein the second stream (54) is between about 10 to 50% by volume of the spent pulping liquor (14), preferably about 25% by volume of the spent pulping liquor (14).

11. The method of any one of the claims 8 to 10, wherein the pH of the permeate (66, 82) used to dilute the smelt (42) is at least 11, such as at least 12.

12. The method of any one of the claims 8 to 11, wherein part of the permeate (66, 82) is sent to the evaporator (22).

## Patentansprüche

1. Ein System (10) zur Behandlung von verbrauchter Aufschlusslauge (14), die Lignin umfasst, um Grünlauge (47) zu erhalten, wobei das System (10) umfasst:
einen Verdampfer (22) zum Konzentrieren eines ersten Stroms (18) der verbrauchten Aufschlusslauge (14), um eine konzentrierte Aufschlusslauge (30) zu erhalten,
einen Rückgewinnungskessel (34) zum Veraschen der konzentrierten Aufschlusslauge (30), um eine Schwarzlaugenschmelze (42) zu erhalten, wenigstens einen Filter (58, 74) zum Filtern eines zweiten Stroms (54) der verbrauchten Aufschlusslauge (14), um Lignin daraus zu entfernen und ein Permeat (66, 82) zu erhalten, und
eine Grünlaugenanlage (46) zum Auflösen der Schwarzlaugenschmelze (42) aus dem Rückgewinnungskessel (34) in wenigstens einem Teil des Permeats (66, 82) aus dem wenigstens einen Filter (58, 74), um Grünlauge (47) zu erhalten.

2. Das System gemäß Anspruch 1, wobei der wenigstens eine Filter (58, 74) umfasst:
einen ersten Filter (58) zum Filtern des zweiten Stroms (54) der verbrauchten Aufschlusslauge (14), um ein erstes Retentat (62) und ein erstes Permeat (66) zu erhalten, und
einen zweiten Filter (74) zum Filtern des ersten Permeats (66), um ein zweites Retentat (78) und ein zweites Permeat (82) zu erhalten,
wobei das zweite Permeat (82) verwendet wird, um die Schwarzlaugenschmelze (42) in der Grünlaugenanlage (46) aufzulösen.

3. Das System gemäß Anspruch 2, wobei der erste Filter (58) ein Membranfilter mit einer Molekulargewichtsobergrenze zwischen 0,5 und 20 kDa ist und der zweite Filter (74) ein Membranfilter ist, der eine geringere Molekulargewichtsobergrenze als der erste Filter (58) aufweist, wobei vorzugsweise die Molekulargewichtsobergrenze des zweiten Filters (74) zwischen 0,1 und 0,8 kDa beträgt.

4. Das System gemäß Anspruch 2 oder Anspruch 3, wobei der erste Filter (58) ein Membranfilter mit einer Molekulargewichtsobergrenze von ca. 1 kDa ist.

5. Das System gemäß einem der Ansprüche 1 bis 4, wobei der zweite Strom (54) zwischen ca. 10 und 50 Vol.-% des Volumens der verbrauchten Aufschlusslauge (14) aufweist.

6. Das System gemäß einem der Ansprüche 1 bis 5, wobei das Volumen des zweiten Stroms (54) etwa 25 Vol.-% und das Volumen des ersten Stroms (18) etwa 75 Vol.-% des Volumens der verbrauchten Aufschlusslauge (14) beträgt.

7. Das System gemäß einem der Ansprüche 1 bis 6, zusätzlich umfassend einen Depolymerisationsreaktor (70) zur Behandlung des ersten Retentats (62), um einen Strom depolymerisierten Lignins (71) zu erhalten.

8. Ein Verfahren zur Behandlung verbrauchter Aufschlusslauge (14), die Lignin umfasst, um Grünlauge (47) zu erhalten, wobei das Verfahren umfasst:
(a) das Aufteilen der verbrauchten Aufschlusslauge (14) in einen ersten Strom (18) und einen zweiten Strom (54),
(b) das Verdampfen (22) des ersten Stroms (18), um eine konzentrierte Aufschlusslauge (30) zu erhalten,
(c) das Veraschen (34) der konzentrierten Aufschlusslauge (30), um eine Schwarzlaugenschmelze (42) zu erhalten,
(d) das Filtern (58, 74) des zweiten Stroms (54), um Lignin zu entfernen, und dadurch ein Permeat (66, 82) mit reduziertem Ligningehalt zu erhalten,
(e) das Auflösen (46) der Schwarzlaugenschmelze (42) in wenigstens einem Teil des Permeats (66, 82), um Grünlauge (47) zu erhalten.

9. Das Verfahren gemäß Anspruch 8, wobei Schritt (d), das Filtern (58, 74) des zweiten Stroms (54), um ein Permeat (66, 82) zu erhalten, umfasst:
(d1) das Filtern (58) des zweiten Stroms (54) der verbrauchten Aufschlusslauge (14), um eine erste Ligninmenge daraus zu entfernen und ein erstes Retentat (62) und ein erstes Permeat (66) zu erhalten, und
(d2) das Filtern des ersten Permeats (66), um eine zweite Ligninmenge zu entfernen und ein zweites Retentat (78) und ein zweites Permeat (82) zu erhalten,
wobei wenigstens ein Teil des zweiten Permeats (82) verwendet wird, um die Schwarzlaugenschmelze (42) in Schritt (e) in der Grünlaugenanlage (46) aufzulösen.

10. Das Verfahren gemäß Anspruch 8 oder Anspruch 9, wobei der zweite Strom (54) zwischen etwa 10 und 50 Vol.-% der verbrauchten Aufschlusslauge (14) umfasst, vorzugsweise etwa 25 Vol.-% der verbrauchten Aufschlusslauge (14).

11. Das Verfahren gemäß einem der Ansprüche 8 bis 10, wobei der pH-Wert des Permeats (66, 82), das verwendet wird, um die Schwarzlaugenschmelze (42) aufzulösen, wenigstens 11, so wie wenigstens 12, beträgt.

12. Das Verfahren gemäß einem der Ansprüche 8 bis 11, wobei ein Teil des Permeats (66, 82) dem Verdampfer (22) zugeführt wird.

## Revendications

1. Système (10) destiné à traiter de la liqueur résiduaire (14) comprenant de la lignine pour obtenir de la liqueur verte (47), le système (10) comprenant :
un évaporateur (22) destiné à concentrer un premier flux (18) de la liqueur résiduaire (14) pour obtenir une liqueur résiduaire concentrée (30) ;
une chaudière de récupération (34) destinée à incinérer la liqueur résiduaire concentrée (30) pour obtenir un salin (42) ;
au moins un filtre (58, 74) destiné à filtrer un second flux (54) de la liqueur résiduaire (14) pour en éliminer la lignine de façon à obtenir un perméat (66, 82) ; et
une installation de liqueur verte (46) destinée à dissoudre le salin (42) provenant de la chaudière de récupération (34) d'au moins une partie du perméat (66, 82) à partir du au moins un filtre (58, 74) pour obtenir de la liqueur verte (47).

2. Système selon la revendication 1, dans lequel l'au moins un filtre (58, 74) comprend :
un premier filtre (58) destiné à filtrer le second flux (54) de la liqueur résiduaire (14) pour obtenir un premier rétentat (62) et un premier perméat (66) ; et
un second filtre (74) destiné à filtrer le premier perméat (66) pour obtenir un second rétentat (78) et un second perméat (82) ;
dans lequel le second perméat (82) sert à dissoudre le salin (42) dans l'installation de liqueur verte (46).

3. Système selon la revendication 2, dans lequel le premier filtre (58) est un filtre à membrane ayant un seuil de rétention des molécules entre 0,5 et 20 kDa et le second filtre (74) est un filtre à membrane ayant un seuil de rétention des molécules inférieur à celui du premier filtre (58) ; le seuil de rétention des molécules du second filtre (74) étant, de préférence, entre 0,1 à 0,8 kDa.

4. Système selon la revendication 2 ou la revendication 3, dans lequel le premier filtre (58) est un filtre à membrane ayant un seuil de rétention des molécules d'environ 1 kDa.

5. Système selon l'une quelconque des revendications 1 à 4, dans lequel le second flux (54) est compris entre environ 10 et 50 % par volume de la liqueur résiduaire (14) .

6. Système selon l'une quelconque des revendications 1 à 5, dans lequel le second flux (54) est d'environ 25 % par volume et le premier flux (18) est d'environ 75 % par volume de la liqueur résiduaire (14).

7. Système selon l'une quelconque des revendications 1 à 6, comprenant en outre un réacteur de dépolymérisation (70) destiné à traiter le premier rétentat (62) pour obtenir un flux de lignine dépolymérisé (71).

8. Procédé de traitement de liqueur résiduaire (14) comprenant de la lignine pour obtenir de la liqueur verte (47), le procédé comprenant les étapes consistant à :
(a) diviser la liqueur résiduaire (14) en un premier flux (18) et un second flux (54) ;
(b) évaporer (22) le premier flux (18) pour obtenir une liqueur résiduaire concentrée (30) ;
(c) incinérer (34) la liqueur résiduaire concentrée (30) pour obtenir un salin (42) ;
(d) filtrer (58, 74) le second flux (54) pour éliminer la lignine, ce qui permet d'obtenir un perméat (66, 82) à teneur réduite en lignine ;
(e) dissoudre (46) le salin (42) d'au moins une partie du perméat (66, 82) pour obtenir une liqueur verte (47).

9. Procédé selon la revendication 8, dans lequel l'étape (d) consistant à filtrer (58, 74) le second flux (54) pour obtenir un perméat (66, 82) comprend les étapes consistant à :
(d1) filtrer (58) le second flux (54) de la liqueur résiduaire (14) pour éliminer une première partie de lignine de façon à obtenir un premier rétentat (62) et un premier perméat (66) ; et
(d2) filtrer le premier rétentat (66) pour éliminer une seconde partie de lignine de façon à obtenir un second rétentat (78) et un second perméat (82) ;
dans lequel au moins une partie du second perméat (82) sert à dissoudre le salin (42) dans l'installation de liqueur verte (46) à l'étape (e).

10. Procédé selon la revendication 8 ou la revendication 9, dans lequel le second flux (54) est d'environ 10 à 50 % par volume de la liqueur résiduaire (14), de préférence d'environ 25 % par volume de la liqueur résiduaire (14).

11. Procédé selon l'une quelconque des revendications 8 à 10, dans lequel le pH du perméat (66, 82) utilisé pour diluer le salin (42) est d'au moins 11, tel que d'au moins 12.

12. Procédé selon l'une quelconque des revendications 8 à 11, dans lequel une partie du perméat (66, 82) est envoyée à l'évaporateur (22).
